# EUROPÄISCHE PATENTSCHRIFT

(11) **EP 2 639 905 B1**
(45) Veröffentlichungstag und Bekanntmachung des Hinweises auf die Patenterteilung: **21.02.2018**
(21) Anmeldenummer: 13158529.1
(22) Anmeldetag: 11.03.2013
(51) Int. Cl.: H02G 3/04, H02G 3/06

(54) **Kabelkanalsystem**
Cable conduit system
Système de caniveaux de câbles

(30) Priorität: 12.03.2012 DE 202012100871 U
(43) Veröffentlichungstag der Anmeldung: 18.09.2013
(73) Patentinhaber: REHAU AG + Co, 95111 Rehau (DE)
(72) Erfinder: Seidel, Bernd, 08209 Auerbach (DE); Künzel, Werner, 95111 Rehau (DE); Christ, Michael, 95028 Hof (DE); Friedrich, Jochen, 95119 Naila (DE); Salzhuber, Frank, 90419 Nürnberg (DE); Engelbrecht, Bernd Jürgen, 90763 Fürth (DE)

(56) Entgegenhaltungen:
- EP-A1- 0 469 457
- DE-A1- 19 614 889
- DE-U1- 7 701 100
- DE-U1- 8 518 566

## Beschreibung

Die Erfindung betrifft ein Kabelkanalsystem umfassend Kabelkanalelemente, wobei diese aus einem etwa U-förmigen Kanalunterteil sowie insbesondere einer daran anordenbaren Abdeckung bestehen, wobei die Kabelkanalelemente an ihren freien Enden mittels wenigstens einem Abdeckelement abdeckbar sind, wobei das Abdeckelement lösbar und / oder verschiebbar an den freien Enden der Kabelkanalelemente anordenbar ist.

Derartige Kabelkanalelemente sind im allgemeinen Stand der Technik bekannt und haben sich in vielne Branchen seit vielen Jahren bewährt. Die Kabelkanalsysteme sind je nach Einsatzbedingungen als Kunststoffteile, hergestellt im Extrusions- bzw. Koextrusionsverfahren, als Aluminiumstrangpressteile oder auch als gekantete Metallblechprofile lieferbar.
Dabei werden die Kabelkanalelemente in fest definierten Längen geliefert, so dass bei der Verlegung bzw. der Montage von längeren bzw. unterschiedlichen Kabelkanalsystemen mehrere einzelne Kabelkanalelemente zusammengesetzt und ggf. an ihren freien Enden optisch ansprechend und sicher gegen unbefugtes Eindringen verschließbar sein sollen.

Für die Umsetzung eines derartigen Verschlusses der freien Enden der Kabelkanalelemente sind aus dem Stand der Technik verschiedenen Lösungen bekannt.

So wird beispielsweise in der DE 2232945 ein Kanal für elektrische Installationen vorgeschlagen, der vorzugsweise nach Art einer Fußleiste verlegt werden kann. Dieser Kanal soll so ausgebildet sein, dass er aus einem als Abdeckung dienenden U-förmigen profilierten Oberteil und einer Anzahl zur Befestigung an der Wand dienender U-förmiger Unterteile geringer Breite besteht, die in verhältnismäßig großem Abstand voneinander an der Wand befestigt sind, dass ferner das Oberteil an der Innenseite seiner Schenkel und die Unterteile an der Außenseite ihrer Schenkel jeweils mit einer feinen, aus einer Anzahl von in Längsrichtung des Kanals parallel zueinander verlaufenden Rillen bestehenden Zahnung versehen sind und dass die Zahnungen des Oberteils und der Unterteile ineinander greifen.

Die in Richtung der Kanallängsachse offenen Seiten der zur Aufnahme von Installationselementen dienenden Oberteile sind durch Abdeckplatten verschlossen.
Diese Abdeckplatten sollen durch sich federnd gegen die Innenseite der Schenkel des Oberteils anliegende Ansätze in ihrer Lage gehalten werden.
Nachteilig bei diesem Kanal aus dem Stand der Technik ist, dass die Abdeckplatten sehr leicht von den freien Endbereichen der Kanäle entnehmbar sind bzw. aus Gründen der Fertigungstoleranzen sowie auch aus der Ermüdung der im Kanal anliegenden Ansätze sich von selbst von den Stirnseiten dieser Kanäle lösen können.

Weitere Kabelkanalsysteme sind aus der DE 196 14 889 A1, der DE 85 18 566 U1, der DE 77 01 100 U1 und der EP 0 469 457 A1 bekannt.

In der DE 8125700 U1 wird ein weiteres Kabelkanalsystem beschrieben mit einem U-förmig profilierten Unterteil und einem darauf festlegbaren Deckel, wobei die in Richtung der Kanallängsachse offenen Seiten durch Abdeckungen verschlossen sind. Die Abdeckungen sollen dabei eine dem Außenumfang des Kanals entsprechende Abdeckplatte aufweisen, von deren dem Kanalinneren zugewandten Oberfläche im Bereich der seitlichen Querwände flächige Vorsprünge mit geraden Außenflächen aufragen, wobei die Vorsprünge wenigstens um die Dicke der Seitenwände des Installationskanals von der zugeordneten seitlichen Querwand zurückversetzt sind und dass an den Außenflächen der Vorsprünge im Bereich der Zurückversetzung wenigstens ein Abschnitt eines Klebebandes angeordnet ist. Das Klebeband kann dabei kompressibel sein und soll den durch die Zurückversetzung der Vorsprünge entstanden Spaltbereich zwischen den Seitenwänden des Installationskanals einerseits und den Außenflächen der Vorsprünge andererseits von ihrer Dicke her gesehen annähernd ausgleichen. Dies soll durch ein doppelseitiges bzw. auch ein geschäumtes Klebeband realisierbar sein. Derartige Klebebänder zur Fixierung von Bauteilen haben sich im Stand der Technik bewährt, sind jedoch nicht besonders baustellentauglich und können im Zuge der Alterung ihre ursprünglichen Eigenschaften verlieren.

Hier setzt die Erfindung ein, die sich die Aufgabe gestellt hat, ein Kabelkanalsystem aufzuzeigen, welches die Nachteile des Standes der Technik überwindet, welches kostengünstig und wirtschaftlich herstellbar ist, welches schnell und sicher an dem Endbereich der Kabelkanalelemente werkzeuglos montierbar ist und welches nach der Montage unverlierbar am Kabelkanalelement angeordnet, dieses den normativen Anforderungen entsprechend verschließt und trotzdem praxisgerecht demontierbar ist.

Erfindungsgemäß wird diese Aufgabe durch die Merkmale des Anspruches 1 gelöst. Weitere vorteilhafte Ausgestaltungen sind in den Unteransprüchen beschrieben.

Es hat sich überraschend herausgestellt, dass ein Kabelkanalsystem umfassend wenigstens ein Abdeckelement und Kabelkanalelemente, wobei diese aus einem etwa U-förmigen Kanalunterteil sowie insbesondere einer daran anordenbaren Abdeckung bestehen, wobei die Kabelkanalelemente an ihren freien Enden mittels des wenigstens einen Abdeckelements abdeckbar sind, wobei das Abdeckelement lösbar und / oder verschiebbar an den freien Enden der Kabelkanalelemente anordenbar ist, wobei das Abdeckelement eine Basisfläche und zwei voneinander beabstandet angeordnete Halteelemente aufweist, welche orthogonal zur Basisfläche des Abdeckelementes angeordnete Wände aufweisen, und zwischen denen wenigstens ein Klemmelement angeordnet ist sich dadurch auszeichnet, dass das Klemmelement wenigstens zwei über eine Basis voneinander beabstandete Schenkel aufweist, an den freien Stirnseiten der Schenkel Federelemente angeordnet sind, die sich an den Wänden abstützen, die Schenkel des Klemmelementes jeweils wenigstens ein an der Basis des Klemmelementes angeordnetes erstes Fixierelement, das sich formschlüssig in der Wand fixiert, und wenigstens ein im Bereich einer etwa zentrisch angeordneten Öffnung des Schenkels angeordnetes zweites Fixierelement aufweisen und der Abstand der Schenkel etwa der Wandstärke des Kanalunterteils entspricht. Durch diese vorteilhafte Ausgestaltung des erfindungsgemäßen Kabelkanalsystems ist der Verschluss der freien Endbereiche der Kabelkanalelemente jederzeit problemlos und optisch ansprechend möglich. Das erfindungsgemäße Kabelkanalsystem zeichnet sich weiterhin dadurch aus, dass das Abdeckelement einen leichten sowie werkzeuglosen Verschluss der freien Endbereiche der Kabelkanalelemente ermöglicht, welches optisch ansprechend dem Design der Kabelkanalelemente angepasst ist und das bei Bedarf unter Zuhilfenahme einfacher Werkzeuge problemlos demontierbar ist.
Das erfindungsgemäße Kabelkanalsystem ist vorteilhafterweise so ausgebildet, dass das Klemmelement stoffschlüssig am Abdeckelement und / oder dem Halteelement angeordnet ist. Hierdurch ist eine optimale Herstellung des die Endbereiches des Kabelkanalelementes abdeckenden Abdeckelemente möglich, wobei diese noch unverlierbar am Abdeckelement und / oder dem Halteelement angeordnet sind.
Ein weiterer Vorteil des erfindungsgemäßen Kabelkanalsystems besteht darin, dass das Klemmelement formschlüssig und/oder kraftschlüssig am Abdeckelement und / oder am Halteelement angeordnet ist. Hierdurch ist ebenfalls eine leichte Montage bzw. Demontage des Abdeckelementes an den freien Endbereichen des Kabelkanalelementes und insbesondere bei der Demontage ein werkstoffgerechtes Entsorgen der einzelnen Elemente des erfindungsgemäßen Kabelkanalsystems möglich.

Es hat sich weiterhin als vorteilhaft herausgestellt, dass das Klemmelement im Querschnitt etwa U-förmig, V-förmig, C-förmig und dergleichen ausgebildet ist. Hierdurch ist eine kostengünstige Herstellung des Klemmelementes realisierbar, während gleichzeitig die normgerechte Fixierung der Abdeckelemente an den Kabelkanalelementen des erfindungsgemäßen Kabelkanalsystems jederzeit möglich und gewährleistet ist.

Im erfindungsgemäßen Kabelkanalsystem weist das Klemmelement wenigstens zwei voneinander über eine Basis beabstandete Schenkel auf. Durch diese Ausführungsform ist es vorteilhafterweise möglich, dass das Klemmelement des erfindungsgemäßen Kabelkanalsystems den verschiedensten geometrischen Ausgestaltungen der zu verschließenden Kabelkanalelemente flexibel anpassbar ist.

Dabei kann es weiterhin vorteilhaft sein, dass wenigstens ein Schenkel des Klemmelementes wenigstens ein im Querschnitt etwa dreieckförmig ausgebildetes erstes Fixierelement aufweist. Dieses erste Fixierelement kann so dimensioniert sein, dass das Klemmelement so formschlüssig an dem Halteelement des Abdeckelementes angeordnet ist, dass sowohl eine schnelle Montage des Abdeckelementes an den freien Enden des Kabelkanalelementes möglich ist und als auch ein entsprechendes Abziehen des Abdeckelementes ohne zusätzliche Werkzeuge nicht möglich ist.

Wenigstens ein Schenkel des Klemmelementes weist wenigstens ein Federelement auf. Dieses Federelement führt vorteilhafterweise zu einer einfachen Montage des Klemmelementes an den Halteelementen des Abdeckelementes.

Wenigstens ein Schenkel des Klemmelementes weist wenigstens eine Öffnung auf und im Bereich der Öffnung ist wenigstens ein zweites Fixierelement angeordnet.

Das erfindungsgemäße Kabelkanalsystem weist an der Öffnung wenigstens eines Schenkels des Klemmelementes mehrere, teilweise einander gegenüberliegende zweite Fixierelemente auf. Hierdurch ist es möglich, dass das die Enden des erfindungsgemäßen Kabelkanalsystems verschließende Abdeckelement trotz werkzeugloser Montage form- und/oder kraftschlüssig am Kabelkanalelement fixiert ist und bei Bedarf unter Zuhilfenahme einfacher Werkzeuge trotzdem reversibel demontierbar ist.

Dabei hat es sich weiterhin als vorteilhaft herausgestellt, dass das Halteelement einstückig mit dem Abdeckelement verbunden ist. Dies führt zu einer kostengünstigen Herstellung und hohen Festigkeit des Abdeckelementes.

Ein weiterer Vorteil des erfindungsgemäßen Kabelkanalsystems wird darin gesehen, dass das Halteelement wenigstens eine orthogonal zur Basisfläche des Abdeckelementes angeordnete Wand aufweist. Diese einfach herzustellende Wand vorteilhafterweise einander gegenüberliegend beabstandet angeordnet kann das Klemmelement formschlüssig in sich aufnehmen und auch bei nicht artgerechter Entfernung des Abdeckelementes vom freien Ende des Kabelkanalelementes diesen fixieren.

Es hat sich aber ebenfalls als vorteilhaft herausgestellt, dass das Halteelement stoffschlüssig und / oder formschlüssig mit dem Abdeckelement verbunden ist. Hierdurch ist es möglich, standardisierte Abdeckelemente herzustellen, in die verschieden dimensionierte Halteelemente stoffschlüssig durch an sich bekanntes Verkleben bzw. Verschweißen oder formschlüssig durch Rast- bzw. Schnappverbindungen nachträglich einbringbar sind.

Es hat sich weiterhin als sehr vorteilhaft herausgestellt, dass der Abstand der Schenkel des Klemmelementes in etwa der Wandstärke des Kabelkanalelementes entspricht.

Hierdurch wird einerseits eine leichte Montage des Abdeckelementes am freien Ende des Kabelkanalsystems ermöglicht und andererseits ein unbeabsichtigtes Herunterziehen ohne Zuhilfenahme von Werkzeugen nicht möglich sein.

Das erfindungsgemäße Kabelkanalsystem ist weiterhin so ausgebildet, dass das Kabelkanalelement und / oder das Abdeckelement und / oder das Klemmelement aus einem metallischen Werkstoff hergestellt sind. Unter metallischen Werkstoffen werden hier insbesondere verstanden Legierungen, insbesondere Eisenlegierungen wie Stahl, Gusseisen, Edelstahl, aber auch Nichteisenmetalle wie Kupfer, Aluminium bzw. Zink. Weiterhin umfasst sind metallische Werkstoffe aus Nichteisenlegierungen wie beispielsweise Messing, Bronze und dergleichen. Dies führt einerseits zu stabilen und optisch ansprechenden Kabelkanalsystemen und andererseits wird durch die Gleichartigkeit der Materialien ein Potenzialausgleich zwischen diesen Elementen realisierbar sein.

Es hat sich jedoch auch weiterhin als vorteilhaft herausgestellt, dass das Kabelkanalelement und / oder das Abdeckelement und / oder das Klemmelement aus einem polymeren Werkstoff hergestellt ist. Unter polymerem Werkstoff sind Materialien gemeint, wie Polyvinylchlorid (PVC); Polyolefin, wie Polypropylen (PP) oder Polyethylen (PE); styrolbasiertes Polymer, wie Polystyrol (PS) oder Styrol-Butadien-Copolymer mit überwiegendem Styrolanteil (SB) oder Acrylnitril-Styrol-Acrylester-Copolymere (ASA) oder AcrylnitrilButadien-Styrol-Copolymere (ABS) oder Styrolacrylnitril (SAN); Polybutylentherephthalat (PBT); Polyethylentherephthalat (PET); Polyoxymethylen (POM); Polyamid (PA); Polymethylmethacrylat (PMMA); Polyphenylenoxid (PPO); Polyetheretherketon (PEEK); Polyphenylensulfid (PPS); Liquid Crystal Polymer (LCP); Polyamidimide (PAI); Polyvinylidenfluorid (PVDF); Polyphenylsulfon (PPSU); Polyaryletherketon (PAEK); Polyacrylnitril (PAN); Polychlortrifluorethylen (PCTFE); Polyetherketon (PEK); Polyimid (PI); Polyisobuten (PIB); Polyphthalamid (PPA); Polypyrrol (PPY);Polytetrafluorethylen (PTFE); Polyurethan (PUR); Polyvinylalkohol (PVA); Polyvinylacetat (PVAC); Polyvinylidenchlorid (PVDC); sowie Mischungen aus wenigstens zwei dieser Materialien. Dabei können dem polymeren Werkstoff des Abdeckelementes geeignete Füll- und / oder Verstärkungsstoffe beigemischt sein, die die mechanischen Eigenschaften positiv beeinflussen insbesondere Glasfaser, Glaskugeln aber auch Füllstoffe wie Kreide, Teflon und dergleichen.
Hierdurch ist es vorteilhafterweise möglich, die Herstellungskosten der erfindungsgemäßen Kabelkanalsysteme in einem überschaubaren Rahmen zu gestalten und andererseits durch an sich bekannte Extrusions- bzw. Koextrusionsverfahren optisch und farblich ansprechende Kabelkanalsysteme zur Verfügung zu stellen, welche sowohl nicht korrodieren als auch nicht elektrisch leitfähig sind.

Eine weitere vorteilhafte Ausgestaltung des erfindungsgemäßen Kabelkanalsystems besteht darin, dass das U-förmige Kanalunterteil des Kabelkanalelementes wenigstens einen das Halteelement aufnehmenden Aufnahmeraum aufweist. Dieser Aufnahmeraum kann dabei vorteilhafterweise im Nichtsichtbereich an der Bodenwand des Kabelkanalelementes angeordnet sein. Es liegt jedoch auch im Rahmen der Erfindung, dass dieser Aufnahmeraum an einer Seitenwand des Kabelkanalelementes anordenbar ist.

Die Erfindung soll nun an Ausführungsbeispielen, die diese nicht einschränken sollen, näher beschrieben werden.

Es zeigen:
- Fig. 1: perspektivische Darstellung eines Ausschnittes eines erfindungsgemäßen Kabelkanalsystems
- Fig. 2: perspektivische Darstellung eines Abdeckelementes des erfindungsgemäßen Kabelkanalsystems
- Fig. 3: perspektivische Darstellung eines Klemmelementes des erfindungsgemäßen Kabelkanalsystems.

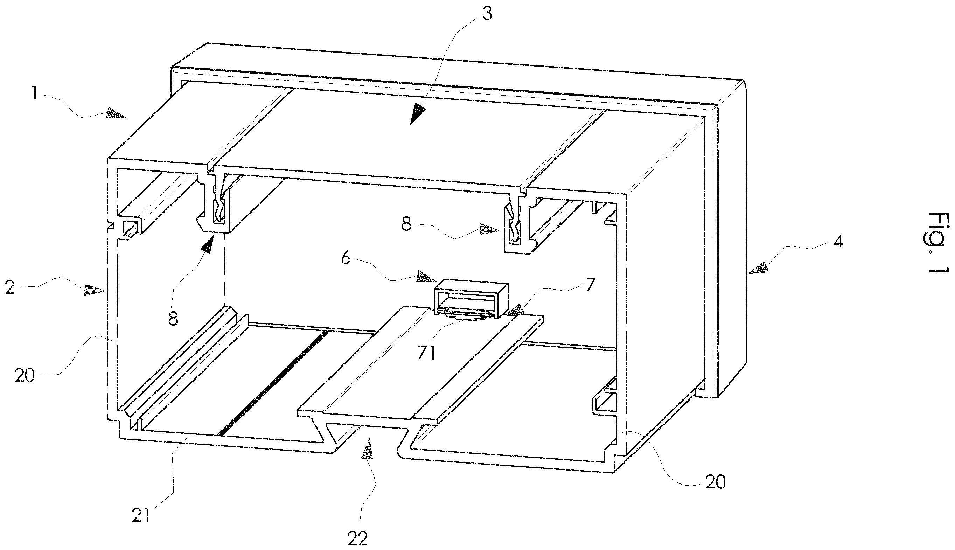

In der Fig. 1 ist eine perspektivische Darstellung eines Ausschnittes eines erfindungsgemäßen Kabelkanalsystems dargestellt.
Das Kabelkanalsystem umfasst in diesem Ausführungsbeispiel ein Kabelkanalelement 1, wobei dieses aus einem etwa U-förmigen Kanalunterteil 2 sowie insbesondere einer daran anordenbaren Abdeckung 3 besteht, wobei das Kabelkanalelement 1 an seinem einem freien Ende mittels eines Abdeckelementes 4 abgedeckt ist.
Das Abdeckelement 4 ist lösbar und / oder verschiebbar an dem freien Ende des Kabelkanalelementes 1 angeordnet und über das am sichtbaren Halteelement 6 sowie am nicht dargestellten Halteelement 5 angeordnete Klemmelement 7 über den Schenkel 71 fixiert.

Das etwa U-förmige Kanalunterteil 2 des Kabelkanalelementes 1 weist in diesem Ausführungsbeispiel zwei voneinander beabstandete Seitenwände 20 auf, die über eine Bodenwand 21 einstückig miteinander verbunden sind.
Die Abdeckung 3 ist über eine an sich bekannte Rastverbindung 8 kraftschlüssig mit dem U-förmigen Kanalunterteil 2 des Kabelkanalelementes 1 verbunden.
In diesem Ausführungsbeispiel weist die Bodenwand 21 des U-förmigen Kanalunterteils 2 einen Aufnahmeraum 22 auf, in dem das hier nicht dargestellte Halteelement 5 einbringbar ist. Der Aufnahmeraum 22 des U-förmigen Kanalunterteils 2 wird durch einen im Querschnitt hinterschnittig, prismatisch ausgebildeten Rücksprung der Bodenwand 21 des U-förmigen Kanalunterteils 2 gebildet.
Das Abdeckelement 4 ist in diesem Ausführungsbeispiel so ausgebildet, dass es das Kabelkanalelement 1 sowie die daran angeordnete Abdeckung 3 umschließt, das offene freie Ende des Kabelkanalelementes 1 verschließt, sowie die über die Rastverbindung 8 am U-förmigen Kanalunterteil 2 angeordnete Abdeckung 3 fixiert.

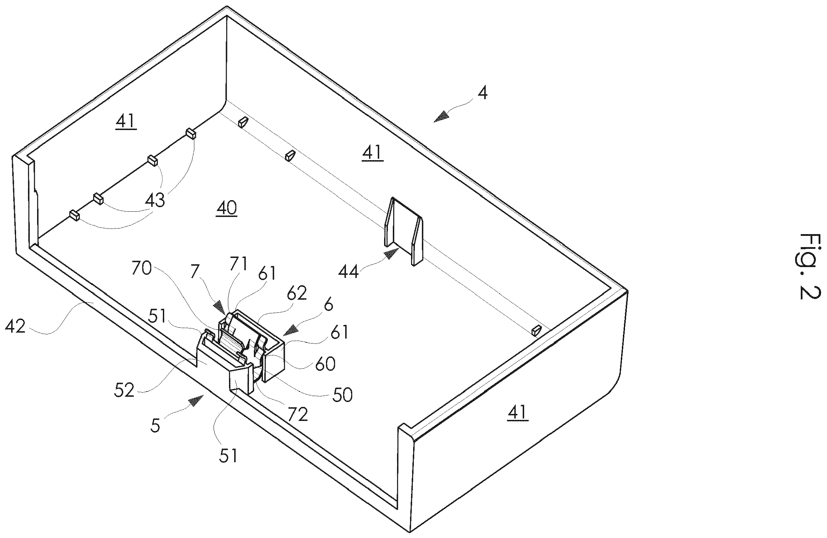

In der Fig. 2 ist eine perspektivische Darstellung eines Abdeckelementes 4 des erfindungsgemäßen Kabelkanalsystems dargestellt.
Das Abdeckelement 4 weist in diesem Ausführungsbeispiel eine Basis 40 auf, welche eine etwa rechteckförmige Fläche aufweist. An der Basis 40 des Abdeckelementes 4 sind Wandabschnitte 41, 42 angeordnet. Die Wandabschnitte 41 des Abdeckelementes 4 umgreifen bei bestimmungsgemäßer Verwendung des Abdeckelementes 4 das freie Ende des erfindungsgemäßen Kabelkanalsystems über ihre gesamte Höhe.
Der Wandabschnitt 42 des Abdeckelementes 4 weist in diesem Ausführungsbeispiel eine geringere Höhe auf als die Wandabschnitte 41.
Am Wandabschnitt 42 des Abdeckelementes 4 ist in diesem Ausführungsbeispiel das erste Halteelement 5 angeordnet, dem gegenüber beabstandet das zweite Halteelement 6 positioniert ist. Zwischen dem ersten Halteelement 5 und dem zweiten Halteelement 6 ist das Klemmelement 7 angeordnet.
Das Klemmelement 7 ist in diesem Ausführungsbeispiel stoffschlüssig an der Basisfläche 40 des Abdeckelementes 4 und dem Halteelement 5, 6 angeordnet.
Das Halteelement 5, 6 ist in diesem Ausführungsbeispiel so ausgebildet, dass es eine orthogonal zur Basisfläche 40 des Abdeckelementes 4 angeordnete Wand 50, 60 aufweist, zwischen denen das Klemmelement 7 angeordnet ist.
Weiterhin ist das Halteelement 5, 6 so ausgebildet, dass an der ersten Wand 50, 60 zweite Wände 51, 61 bzw. dritte Wände 52, 62 angeordnet sind, die ebenfalls mit der Basisfläche 40 des Abdeckelementes 4 und der ersten Wand 50, 60 des Halteelementes 5, 6 in diesem Beispiel einstückig verbunden sind.
Die zweiten Wände 51, 61 und die dritten Wände 52, 62 führen zu einer Stabilisierung der ersten Wand 50, 60, so dass das dazwischen befindliche Klemmelement 7 einfach montierbar und später nicht demontierbar anordenbar ist.
Dabei weisen die zweiten Wände 51, 61 Vorsprünge 53, 63 auf, die die freien Enden des Klemmelementes 7 eingrenzen. Somit ist ebenfalls eine leichte Montage des Klemmelementes 7 zwischen der ersten Wand 50, 60 der Halteelemente 5, 6 möglich.
In diesem Ausführungsbeispiel ist das Abdeckelement 4 aus einem polymeren Werkstoff wie Polyvinylchlorid hergestellt und das Klemmelement 7 aus einem metallischen Werkstoff wie Stahl.
Das zwischen den zwei voneinander beabstandet angeordneten Halteelementen 5, 6 angeordnete Klemmelement 7 weist in diesem Ausführungsbeispiel zwei über eine Basis 72 beabstandete Schenkel 70, 71 auf. Der Abstand der Schenkel 70, 71 des Klemmelementes 7 ist in diesem Ausführungsbeispiel in etwa gleich der Wandstärke der Bodenwand 21 des U-förmigen Kanalunterteils 2 ausgebildet.
Durch diese vorteilhafte Ausgestaltung kann das Abdeckelement 4 über das zwischen den beabstandet angeordneten Halteelementen 5, 6 angeordnete Klemmelement 7 an einem freien Ende des erfindungsgemäßen Kabelkanalsystems angeordnet, werkzeuglos aufgeschoben und fixiert werden.
Das Abdeckelement 4 des erfindungsgemäßen Kabelkanalsystems weist weiterhin an seiner Basisfläche 40 Distanzelemente 43 auf, an denen nach der Montage des Abdeckelementes 4 an dem freien Ende des erfindungsgemäßen Kabelkanalsystems die Seitenwand 20 des U-förmigen Kanalunterteils 2 anliegt.

Das Abdeckelement 4 weist weiterhin an seiner den Halteelementen 5, 6 gegenüberliegenden Wand 41 ein weiteres Element 44 auf. Dieses Element 44 führt vorteilhafterweise dazu, dass nach der Montage des Abdeckelementes4 an den freien Enden des erfindungsgemäßen Kabelkanalsystems die im U-förmigen Kanalunterteil 2 angeordnete Abdeckung 3 in diesem Bereich so am U-förmigen Kanalunterteil 2 anliegt. Hierdurch wird einem möglichen Drehen des Abdeckelements 4, um den Drehpunkt im Bereich des Halteelements 5, 6 entgegengewirkt.

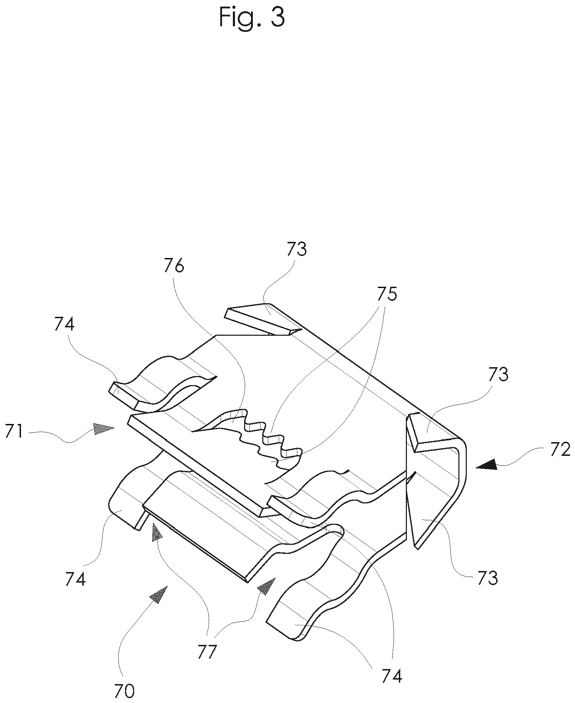

In der Fig. 3 ist eine perspektivische Darstellung eines Klemmelementes 7 des erfindungsgemäßen Kabelkanalsystems dargestellt.
Das Klemmelement 7 weist zwei voneinander über die Basis 72 beabstandete Schenkel 70, 71 auf. An der Basis 72 des Klemmelementes 7 einstückig angeordnet sind erste Fixierelemente 73 ausgebildet, welche im Querschnitt gesehen etwa dreieckförmig gestaltet sind. Die ersten Fixierelemente 73 sind in etwa einem spitzen Winkel zum Schenkel 70, 71 des Klemmelements 7 an den freien Enden der Basis 72 angeordnet und dienen bei bestimmungsgemäßen Gebrauch dazu, das Klemmelement 7 formschlüssig an den Halteelementen 5, 6 zu fixieren.
Der Schenkel 71 des Klemmelements 7 weist eine etwa zentrisch angeordnete Öffnung 76 auf, wobei im Bereich der Öffnung 76 zweite Fixierelemente 75 angeordnet sind, die etwa sägezahnförmig ausgebildet sind. In diesem Ausführungsbeispiel sind die zweiten Fixierelemente 75 an der Öffnung 76 des Schenkels 71 des Klemmelements 7 einander gegenüberliegend angeordnet.
Die zweiten Fixierelemente 75, welche in diesem Ausführungsbeispiel aus drei einzelnen nebeneinanderliegend angeordneten zweiten Fixierelementen 75 bestehen, sollen bei bestimmungsgemäßer Montage des hier nicht dargestellten Abdeckelements 4 am erfindungsgemäßen Kabelkanalsystem dafür sorgen, dass das Abdeckelement 4 über die zweiten Fixierelemente 75, welche sich formschlüssig an der nicht dargestellten Bodenwand 21 des U-förmigen Kanalunterteils 2 fixieren, befestigt ist.

Das Klemmelement 7 ist weiterhin so ausgebildet, dass an den freien Stirnseiten der Schenkel 70, 71 Federelemente 74 angeordnet sind.
Diese Federelemente 74 sind einstückig am Schenkel 70, 71 des Klemmelements 7 über einen Spalt 77 beabstandet angeordnet. Der Abstand der Schenkel 70, 71 des Klemmelements 7 voneinander entspricht in diesem Ausführungsbeispiel in etwa der Wandstärke des nicht dargestellten U-förmigen Kanalunterteils 2. Die Federelemente 74 des Schenkels 70 sind von den Federelementen 74 des Schenkels 71 beabstandet angeordnet.

Durch die Federelemente 74 wird das Klemmelement 7 bei Montage zwischen den Halteelementen 5, 6 in seiner Lage symmetrisch ausgerichtet, um die Schenkel 70, 71 für die Aufnahme der Bodenwand 20 des U- förmigen Kanalunterteils 2 optimal auszurichten. Wird das Abdeckelement 4 mit dem Klemmelement 7 nun auf das freie Ende des erfindungsgemäßen Kabelkanalsystems montiert, erzeugen die Federelemente 74 einen zusätzlichen Druck auf die Fixierelemente 73, 75.
Hierdurch wird ein Verlangen des Klemmelementes 7, nach der Montage am freie Ende des Kabelkanalsystems das Abdeckelement 4 im Drehpunkt des Klemmelements 7 in Richtung Kabelkanalsystem zu drehen, zusätzlich unterstützt und sorgt damit ebenfalls für einen haptisch sichern Halt. Großer Vorteil dieser Montage liegt in der Kompensierung vorhandener Fertigungstoleranzen der Bestandteile des Kabelkanalsystems, welche sich ohne diese Maßnahmen in einer möglichen Spaltbildung zwischen dem Abdeckelement 4 und der Oberfläche des Kabelkanalsystems im Bereich der Abdeckung 3 äußern könnte.

Bei bestimmungsgemäßer Verwendung wird das Klemmelement 7 in die voneinander beabstandet angeordneten, hier nicht dargestellten, Halteelemente 5, 6 so eingebracht, dass sich die ersten Fixierelemente 73 formschlüssig in der Wand 50, 60 des Halteelements 5, 6 fixieren und somit das Klemmelement 7 im nicht dargestellten Abdeckelement 4 fixiert ist.
Die Federelemente 74 der Schenkel 70, 71 des Klemmelements 7 stützen sich ebenfalls an der Wand 50, 60 des Haltelements 5, 6 ab.

Wird nun das in der Fig. 2 dargestellte Abdeckelement 4 mit dem Klemmelement 7 auf ein freies Ende eines erfindungsgemäßen Kabelkanalsystems angesetzt, kann dieses werkzeuglos auf das freie Ende des erfindungsgemäßen Kabelkanalsystems aufgeschoben werden, wobei sich die zweiten Fixierelemente 75 des Klemmelements 7 an der Innenseite der Bodenwand 21 des U-förmigen Kanalunterteils 2 formschlüssig fixieren.
Das Abdeckelement 4 ist somit gemäß der Fig. 1 am freien Ende des erfindungsgemäßen Kabelkanalsystems montiert, wobei die Wände 41 des Abdeckelements 4 das freie Ende des erfindungsgemäßen Kabelkanalsystems vollumfänglich umschließen.

Ein weiterer Vorteil dieser Ausführungsform besteht darin, dass das erste Halteelement 5 in seiner Außenkontur so ausgebildet ist, dass es in Wirkverbindung mit dem Aufnahmeraum 22 des U-förmigen Kanalunterteils 2 treten kann und somit zur Stabilisierung bzw. Fixierung des Abdeckelements 4 am erfindungsgemäßen Kabelkanalsystems führt.
Dabei ist das Klemmelement 7 gemäß der Fig. 3 aus einem metallischen Werkstoff wie Stahl hergestellt und führt insbesondere bei bestimmungsgemäßem Gebrauch an einem erfindungsgemäßen Kabelkanalsystem aus einem polymeren Werkstoff zu einem optisch ansprechenden und mechanisch stabilen Verschluss des freien Endes des erfindungsgemäßen Kabelkanalsystems.

Ein weiterer Vorteil des erfindungsgemäßen Kabelkanalsystems wird darin gesehen, dass es bei Bedarf jederzeit möglich ist, das Abdeckelement 4 vom erfindungsgemäßen Kabelkanalsystem zu demontieren.
Hierzu wird gemäß der Fig. 1 die Abdeckung 3 aus der an sich bekannten Rastverbindung 8 des U-förmigen Kanalunterteils 2 entnommen und mittels eines geeignetes Werkzeuges kann nun der Schenkel 71 des Klemmelements 7 von der Bodenwand 21 des U-förmigen Kanalunterteils 2 abgehebelt und das Abdeckelement 4 zerstörungsfrei demontiert werden. Dieser Vorteil resultiert insbesondere daraus, dass in diesem Ausführungsbeispiel nur im Schenkel 71 des Klemmelements 7 eine Öffnung 76 angeordnet ist, an der die zweiten Fixierelemente 75 positioniert sind.

## Patentansprüche

1. Kabelkanalsystem umfassend wenigstens ein Abdeckelement (4) und Kabelkanalelemente (1), wobei diese aus einem etwa U-förmigen Kanalunterteil (2) sowie insbesondere einer daran anordenbaren Abdeckung (3) bestehen, wobei die Kabelkanalelemente (1) an ihren freien Enden mittels des wenigstens einen Abdeckelements (4) abdeckbar sind, wobei das Abdeckelement (4) lösbar und/oder verschiebbar an den freien Enden der Kabelkanalelemente (1) anordenbar ist, wobei das Abdeckelement (4) eine Basisfläche (40) und wenigstens zwei voneinander beabstandet angeordnete Halteelemente (5, 6) aufweist, wobei die Halteelemente (5, 6) orthogonal zur Basisfläche (40) des Abdeckelementes (4) angeordnete Wände (50, 60) aufweisen, zwischen denen wenigstens ein Klemmelement (7) angeordnet ist, **dadurch gekennzeichnet, dass** das Klemmelement (7) wenigstens zwei über eine Basis (72) voneinander beabstandete Schenkel (70, 71) aufweist, an den freien Stirnseiten der Schenkel (70, 71) Federelemente (74) angeordnet sind, die sich an den Wänden (50, 60) abstützen, die Schenkel (70, 71) des Klemmelementes (7) jeweils wenigstens ein an der Basis des Klemmelementes (7) angeordnetes erstes Fixierelement (73), das sich formschlüssig in der Wand (50, 60) fixiert, und wenigstens ein im Bereich einer etwa zentrisch angeordneten Öffnung (76) des Schenkels (71) angeordnetes zweites Fixierelement (75) aufweisen, und der Abstand der Schenkel (70, 71) etwa der Wandstärke des Kanalunterteils entspricht.

2. Kabelkanalsystem nach Anspruch 1, **dadurch gekennzeichnet, dass** das Klemmelement (7) stoffschlüssig am Abdeckelement (4) und/oder den Halteelementen (5, 6) angeordnet ist.

3. Kabelkanalsystem nach Anspruch 1, **dadurch gekennzeichnet, dass** das Klemmelement (7) formschlüssig und/oder kraftschlüssig am Abdeckelement (4) und/oder an den Halteelementen (5, 6) angeordnet ist.

4. Kabelkanalsystem nach einem der vorhergehenden Ansprüche, **dadurch gekennzeichnet, dass** die Halteelemente (5, 6) einstückig mit dem Abdeckelement (4) verbunden ist.

5. Kabelkanalsystem nach einem der vorhergehenden Ansprüche, **dadurch gekennzeichnet, dass** die Halteelemente (5, 6) stoffschlüssig und/oder formschlüssig mit dem Abdeckelement (4) verbunden ist.

6. Kabelkanalsystem nach einem der vorhergehenden Ansprüche, **dadurch gekennzeichnet, dass** der Abstand der Schenkel (70, 71) des Klemmelementes (7) in etwa der Wandstärke der Bodenwand (21) des Kabelkanalelementes (1) entspricht.

7. Kabelkanalsystem nach einem der vorhergehenden Ansprüche, **dadurch gekennzeichnet, dass** das Kabelkanalelement (1) und/oder das Abdeckelement (4) und / oder das Klemmelement (7) aus einem metallischen Werkstoff hergestellt ist.

8. Kabelkanalsystem nach einem der vorhergehenden Ansprüche, **dadurch gekennzeichnet, dass** das Kabelkanalelement (1) und / oder das Abdeckelement (4) und / oder das Klemmelement (7) aus einem polymeren Werkstoff hergestellt ist.

9. Kabelkanalsystem nach einem der vorhergehenden Ansprüche, **dadurch gekennzeichnet, dass** das U-förmige Kanalunterteil (2) des Kabelkanalelementes (1) wenigstens einen das Halteelement (5, 6) aufnehmenden Aufnahmeraum (22) aufweist.

## Claims

1. Cable conduit system comprising at least one covering element (4) and cable channel elements (1), wherein these consist of an approximately U-shaped channel lower part (2) as well as in particular a cover (3) arrangeable thereon, wherein the cable channel elements (1) are coverable at their free ends by means of the at least one covering element (4), wherein the covering element (4) is detachably and/or displaceably arrangeable on the free ends of the cable channel elements (1), wherein the covering element (4) has a base surface (40) and at least two retaining elements (5, 6) arranged spaced apart from one another, wherein the retaining elements (5, 6) have walls (50, 60) arranged orthogonally to the base surface (40) of the covering element (4), between which at least one clamping element (7) is arranged, **characterized in that** the clamping element (7) has at least two legs (70, 71) spaced apart from one another by a base (72), spring elements (74), which bear against the walls (50, 60), are arranged on the free end faces of the legs (70, 71), the legs (70, 71) of the clamping element (7) each comprise at least one first fixing element (73), arranged on the base of the clamping element (7), which fixes positively itself in the wall (50, 60) and at least one second fixing element (75) arranged in the area of an opening (76) arranged approximately centrally of the leg (71), and the distance of the legs (70, 71) corresponds approximately to the wall thickness of the channel lower part.

2. Cable conduit system according to claim 1, **characterized in that** the clamping element (7) is adhesively arranged on the covering element (4) and/or the retaining elements (5, 6).

3. Cable conduit system according to claim 1, **characterized in that** the clamping element (7) is arranged on the covering element (4) and/or on the retaining elements (5, 6) in a positive and/or non-positive manner.

4. Cable conduit system according to one of the preceding claims, **characterized in that** the retaining elements (5, 6) are connected with the covering element (4) in one piece.

5. Cable conduit system according to one of the preceding claims, **characterized in that** the retaining elements (5, 6) are connected with the covering element (4) adhesively and/or by means of positive fit.

6. Cable conduit system according to one of the preceding claims, **characterized in that** the distance of the legs (70, 71) of the clamping element (7) corresponds approximately to the wall thickness of the bottom wall (21) of the cable channel element (1).

7. Cable conduit system according to one of the preceding claims, **characterized in that** the cable channel element (1) and/or the covering element (4) and/or the clamping element (7) are produced from a metallic material.

8. Cable conduit system according to one of the preceding claims, **characterized in that** the cable channel element (1) and/or the covering element (4) and/or the clamping element (7) are made of a polymer material.

9. Cable conduit system according to one of the preceding claims, **characterized in that** the U-shaped channel lower part (2) of the cable channel element (1) comprises at least one receiving space (22), which receives the retaining element (5, 6).

## Revendications

1. Système de goulotte de câble comprenant au moins un élément de couvercle (4) et des éléments (1) de goulotte de câble constitués d'une partie inférieure de goulotte (2) sensiblement en forme de U et en particulier d'un couvercle (3) qui peut y être placé, les éléments (1) de goulotte de câble pouvant être recouverts à leur extrémité libre au moyen du ou des éléments de couvercle (4), l'élément de couvercle (4) pouvant être placé de manière libérable et/ou coulissante sur les extrémités libres des éléments (1) de goulotte de câble, l'élément de couvercle (4) présentant une surface de base (40) et au moins deux éléments de maintien (5, 6) disposés à distance mutuelle, les éléments de maintien (5, 6) présentant des parois (50, 60) disposées perpendiculairement à la surface de base (40) de l'élément de couvercle (4), un élément de serrage (7) étant disposé entre ces parois, **caractérisé en ce que** l'élément de serrage (7) présente au moins deux ailes (70, 71) maintenues à distance mutuelle par l'intermédiaire d'une base (72), **en ce que** des éléments élastiques (74) qui s'appuient sur les parois (50, 60) sont disposés sur les côtés frontaux libres des ailes (70, 71), **en ce que** chacune des ailes (70, 71) de l'élément de serrage (7) présente au moins un premier élément de fixation (73) disposé à la base de l'élément de serrage (7) et se fixant en correspondance géométrique dans la paroi (50, 60) et au moins un deuxième élément de fixation (75) disposé au niveau d'une ouverture (76) disposée sensiblement au centre de l'aile (71) et **en ce que** la distance entre les ailes (70, 71) correspond sensiblement à l'épaisseur de la paroi de la partie inférieure de la goulotte.

2. Système de goulotte de câble selon la revendication 1, **caractérisé en ce que** l'élément de serrage (7) est disposé en correspondance de matière sur l'élément de couvercle (4) et/ou sur les éléments de maintien (5, 6).

3. Système de goulotte de câble selon la revendication 1, **caractérisé en ce que** l'élément de serrage (7) est disposé en correspondance géométrique et/ou en correspondance mécanique sur l'élément de couvercle (4) et/ou sur les éléments de maintien (5, 6).

4. Système de goulotte de câble selon l'une des revendications précédentes, **caractérisé en ce que** les éléments de maintien (5, 6) sont reliés d'un seul tenant à l'élément de couvercle (4).

5. Système de goulotte de câble selon l'une des revendications précédentes, **caractérisé en ce que** les éléments de maintien (5, 6) sont reliés en correspondance de matière et/ou en correspondance géométrique à l'élément de couvercle (4).

6. Système de goulotte de câble selon l'une des revendications précédentes, **caractérisé en ce que** la distance entre les ailes (70, 71) de l'élément de serrage (7) correspond sensiblement à l'épaisseur de la paroi de fond (21) de l'élément (1) de goulotte de câble.

7. Système de goulotte de câble selon l'une des revendications précédentes, **caractérisé en ce que** l'élément (1) de goulotte de câble, l'élément de couvercle (4) et/ou l'élément de serrage (7) sont réalisés en un matériau métallique.

8. Système de goulotte de câble selon l'une des revendications précédentes, **caractérisé en ce que** l'élément (1) de goulotte de câble, l'élément de couvercle (4) et/ou l'élément de serrage (7) sont réalisés en un matériau polymère.

9. Système de goulotte de câble selon l'une des revendications précédentes, **caractérisé en ce que** la partie inférieure (2) en forme de U de l'élément (1) de goulotte de câble présente au moins un espace de réception (22) qui reprend l'élément de maintien (5, 6).
